# EUROPÄISCHE PATENTSCHRIFT

(11) **EP 0 745 035 B1**
(45) Veröffentlichungstag und Bekanntmachung des Hinweises auf die Patenterteilung: **25.03.1998**
(21) Anmeldenummer: 95908228.0
(22) Anmeldetag: 31.01.1995
(51) Int. Cl.: H02M 7/162

(54) **LÖSCHBARER KOMMUTIERUNGSZWEIG**
EXTINGUISHABLE SWITCHING LEG
BRANCHE DE COMMUTATION DECHARGEABLE

(30) Priorität: 16.02.1994 DE 4405559
(43) Veröffentlichungstag der Anmeldung: 04.12.1996
(73) Patentinhaber: ELPRO AG BERLIN-INDUSTRIEELEKTRONIK UND ANLAGENBAU, D-13053 Berlin (DE)
(72) Erfinder: GERLACH, Horst, D-13055 Berlin (DE)
(86) Internationale Anmeldenummer: EP9500332
(87) Internationale Veröffentlichungsnummer: WO9522470

(56) Entgegenhaltungen:
- WO-A-92/13735
- DE-A- 4 126 816
- DE-A- 4 126 819

## Beschreibung

Die Erfindung betrifft eine Schaltungsanordnung zur Löschung eines Stromes im Kommutierungszweig eines Gleichrichter-Unterwerkes zur Bahnstromversorgung.

Bei Gleichrichter-Unterwerken zur Versorgung von Gleichstrombahnen sind Verfahren und Anordnungen bekannt, bei denen zur Stromversorgung ein halbgesteuerter Gleichrichter eingesetzt wird und eine Überstrom- bzw. Kurzschlußabschaltung durch den Thyristor des Gleichrichters erfolgt. Löschschaltungen zur Abschaltung von Strömen durch den Hauptthyristor sind hinreichend bekannt. In der DE 41 04 384 ist eine Lösch- und Ladeeinrichtung zur Löschung des Stromes durch den Thyristor beschrieben. Zur Gewährleistung eines ungestörten Bahnbetriebes ist es erforderlich, daß beim Abschalten des Thyristors im Gleichrichter des Unterwerkes der fließende Strom in einen Kommutierungskreis geleitet wird.

Aufgabe der Erfindung ist es, eine Schaltungsanordnung anzugeben, die es ermöglicht eine einfache und kostengünstige Löschung des Stromes im Kommutierungszweig zu gewährleisten.

Erfindungsgemäß wird ein löschbarer Kommutierungszweig dadurch erreicht, daß in einem Gleichrichter-Unterwerk mit einer Lösch- und Ladeeinrichtung in Gegentaktschaltung sowie mit Streckenfreilaufdioden und Rückstromdioden zur Ankopplung der Streckenabgänge ein Kommutierungsthyristor anodenseitig über eine Ankoppeldiode mit der Sammelschiene und einerseits direkt mit einer Rückstromschleifenleitung und andererseits über einen Dämpfungswiderstand und eine Diode mit der Anode eines ersten Löschthyristors der Lösch- und Ladeeinrichtung verbunden ist. Die Lösch- und Ladeeinrichtung wird auch zum Löschen des Kommutierungsthyristors genutzt. Die Kathode des Kommutierungsthyristors ist einerseits direkt mit einer Freilaufschleifenleitung und über eine Auskoppeldiode mit der Sammelschiene verbunden.

Somit kann die vorhandene Lösch- und Ladeeinrichtung ebenfalls zur Löschung des Kommutierungsthyristors genutzt werden und andererseits ist durch die Anordnung der Auskoppeldiode ein kurzer Weg für die Löschströme zur Löschung des Hauptthyristors, auch bei Abschaltung aller Streckenabgangsschalter, gewährleistet.

Zur Begrenzung des Spannungsabfalles über dem Dämpfungswiderstand, auch bei hohen Kommutierungsströmen, ist ein Varistor parallel zum Dämpfungswiderstand angeordnet.

Die in Reihe mit der Auskoppeldiode angeordnete Sättigungsdrossel soll verhindern, daß beim Löschen des Kommutierungsthyristors die Löschspannung durch die Auskoppeldiode kurzgeschlossen wird.

Zur Gewährleistung eines sicheren Einschaltbetriebes sind parallel zu den Ladeventilen der Lösch- und Ladeeinrichtung Ladewiderstände angeordnet.

Die Erfindung soll anhand eines Ausführungsbeispieles näher erläutert werden. In der zugehörigen Zeichnung ist ein Gleichrichter-Unterwerk mit Thyristorschalter, Lösch- und Ladeeinrichtung in Gegentaktschaltung sowie Streckenabgängen dargestellt.

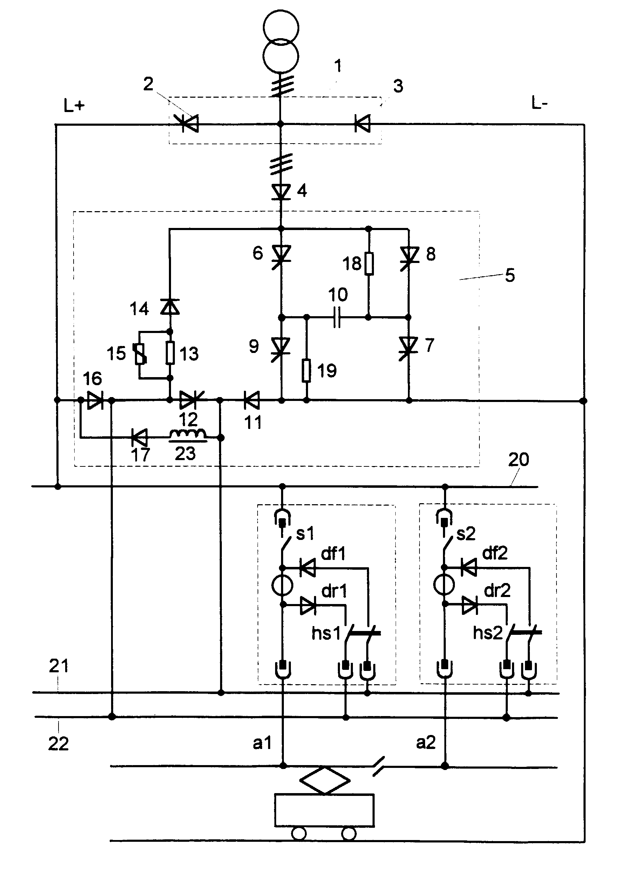

Die Figur zeigt einen halbgesteuerten Gleichrichter 1, bestehend aus den Hauptthyristoren 2 und den Hauptdioden 3, die durch ein dreiphasiges Netz gespeist werden. Über Ankoppeldioden 4 wird eine Lösch-, Lade- und Kommutierungseinrichtung 5 an den Gleichrichter 1 angekoppelt. In der Zeichnung wurde die einphasige Darstellung gewählt.

Die Lösch- und Ladeeinrichtung in Gegentaktschaltung mit den Löschventilen 6 und 7 sowie den Ladeventilen 8 und 9 in Verbindung mit dem Löschkondensator 10 ist bekannt. Sie wird in der erfindungsgemäßen Schaltungsanordnung gleichzeitig zum Löschen eines Kommutierungsthyristors 12 genutzt.

Eine Kurzschlußabschaltung eines Streckenabganges, beispielsweise a1, erfolgt durch das Löschen des Hauptthyristors 2 und anschließendes Öffnen des Streckenabgangsschalters s1. Der Strom kommutiert nun vom Hauptthyristor 2 über die Ankoppeldiode 4 in einen Löschzweig, der aus folgenden Elementen besteht: Löschventile 6 und 7, Löschkondensator 10, Sperrdiode 11, Sättigungsdrossel 23 und einer Auskoppeldiode 17, zur Sammelschiene 20.

Erfindungsgemäß wird der löschbare Kommutierungszweig dadurch erreicht, daß der Kommutierungsthyristor 12 durch das Zünden der Löschventile 6 und 7 gelöscht wird und der Kommutierungsstrom nun vom Kommutierungsthyristor 12 in einen Zweig bestehend aus einem Dämpfungswiderstand 13, einer Diode 14, den Löschventilen 6 und 7 sowie dem Löschkondensator 10 und der Sperrdiode 11 kommutiert.
Dabei ist es unerheblich, ob der Strom, im Fall 1, von der Sammelschiene 20 durch den Streckenabgangsschalter s1 zum Streckenabgang a1 während des Kommutierungsvorganges fließt, oder, im Fall 2, umgekehrt, vom Streckenabgang a1 durch den Streckenabgangsschalter s1 zur Sammelschiene 20 fließt. Jedesmal wird der Strom ordnungsgemäß in den Kommutierungsthyristor 12 geleitet.

Die Ankopplung des Kommutierungsthyristors 12 erfolgt von der Sammelschiene 20 mittels der Ankoppeldiode 16, so daß einerseits eine Kommutierung erreicht wird und andererseits durch die Auskoppeldiode 17 ein kurzer Weg für die Löschströme zur Löschung des Hauptthyristors realisiert wird. Durch diese Anordnung der Auskoppeldiode 17 bleibt der Hauptthyristor 2 auch bei Abschaltung aller Streckenabgangsschalter a1, a2 löschbar. In Reihe mit der Auskoppeldiode 17 ist eine Sättigungsdrossel 23 angeordnet, damit beim Löschen des Kommutierungsthyristors 12 die Löschspannung nicht durch die Auskoppeldiode 17 kurzgeschlossen wird.

Im Fall 1 fließt der Strom von der Sammelschiene 20 zur Ankoppeldiode 16, durch den Kommutierungsthyristor 12, durch eine Freilaufschleifenleitung 21 und eine Streckenfreilaufdiode df1 zum Streckenabgang a1.

Im Fall 2 fließt der Strom vom Streckenabgang a1 durch eine Rückstromdiode dr1, über eine Rückstromschleifenleitung 22, durch den Kommutierungsthyristor 12, durch die Sättigungsdrossel 23 und die Auskoppeldiode 17 zur Sammelschiene 20.

Durch einen Varistor 15, der parallel zum Dämpfungswiderstand 13 angeordnet ist, wird bei großen Kommutierungsströmen eine Spannungsabfallbegrenzung für den Dämpfungswiderstand 13 erreicht, was sich vorteilhaft auf das Löschen des Kommutierungsthyristors 12 auswirkt.

Durch die parallel zu den Ladeventilen 8 und 9 angeordneten Ladewiderstände 18 und 19 wird ein sicherer Einschaltbetrieb der Lösch-, Lade- und Kommutierungseinrichtung 5 gewährleistet.

Durch Öffnen des Hilfsschützes hs1 kann man einen fehlerbehafteten Streckenabgang a1, nach vorangegangener negativer Streckenprüfung, endgültig abtrennen, da der Streckenabgangsschalter s1 bereits geöffnet war.

## Patentansprüche

1. Löschbarer Kommutierungszweig in einem Gleichrichter-Unterwerk mit einer Lösch- und Ladeeinrichtung in Gegentaktschaltung (5), mit Streckenfreilaufdioden (df1, df2) und Rückstromdioden (dr1, dr2) zur Ankopplung von Streckenabgängen (a1, a2), **dadurch gekennzeichnet**, daß ein Kommutierungsthyristor (12) anodenseitig über eine Ankoppeldiode (16) mit einer Sammelschiene (20) sowie einerseits direkt mit einer Rückstromschleifenleitung (22) und andererseits über einen Dämpfungswiderstand (13) und eine Diode (14) mit der Anode eines Löschthyristors (6) der Lösch- und Ladeeinrichtung (5) derart verbunden ist, daß die Lösch- und Ladeeinrichtung (5) auch zum Löschen des Kommutierungsthyristors (12) genutzt wird, während die Kathode des Kommutierungsthyristors (12) direkt mit einer Freilaufschleifenleitung (21) sowie über eine Auskoppeldiode (17) mit der Sammelschiene (20) verbunden ist.

2. Löschbarer Kommutierungszweig nach Anspruch 1, **dadurch gekennzeichnet**, daß parallel zu Ladeventilen (8, 9) Ladewiderstände (18, 19) angeordnet sind.

3. Löschbarer Kommutierungszweig nach Anspruch 1, **dadurch gekennzeichnet**, daß parallel zum Dämpfungswiderstand (13) ein Varistor (15) angeordnet ist, der den Spannungsabfall über dem Dämpfungswiderstand (13) begrenzt um jederzeit die Löschung des Kommutierungsthyristors (12) zu gewährleisten.

4. Löschbarer Kommutierungszweig nach Anspruch 1, **dadurch gekennzeichnet**, daß in Reihe mit der Auskoppeldiode (17) eine Sättigungsdrossel (23) angeordnet ist.

## Claims

1. Extinguishable commutation arm in a rectifier substation with an extinguishing and charging device in push-pull connection (5), with section free-wheeling diodes (df1, df2) and reverse current diodes (dr1, dr2) to connect section outgoing feeders (a1, a2), **characterised in that** a commutation thyristor (12) is connected on the anode side via a coupling diode (16) to a bus bar (20), and on one side directly to a reverse current loop lead (22) and on the other side via a damping resistor (13) and a diode (14) to the anode of an extinguishing thyristor (6) ofthe extinguishing and charging device (5), in such a way that the extinguishing and charging device (5) is also used to extinguish the commutation thyristor (12), whereas the cathode of the commutation thyristor (12) is directly connected to a free-wheeling loop lead (21) and via a decoupling diode (17) to the bus bar (20).

2. Extinguishable commutation arm according to Claim 1, **characterised in that** charging resistors (18, 19) are arranged in parallel with charging valves (8, 9).

3. Extinguishable commutation arm according to Claim 1, **characterised in that** a varistor (15) is arranged in parallel with the damping resistor (13), and limits the voltage drop over the damping resistor (13), to ensure that the commutation thyristor (12) is always extinguished.

4. Extinguishable commutation arm according to Claim 1, **characterised in that** a saturable reactor (23) is arranged in series with the decoupling diode (17).

## Revendications

1. Branche de commutation déchargeable dans une sous-station de redressement munie d'un dispositif de décharge et de charge en montage symétrique (5), comprenant des diodes de roue libre de voie (df1, df2) et des diodes courant inverse (dr1, dr2) destinées l'accouplement de sorties de voie (a1, a2),
**caractérisée en ce** qu'un thyristor de commutation (12) est relié, côté anode, avec une barre omnibus (20) via une diode d'accouplement (16) ainsi que, d'un côté, directement avec une boucle courant inverse (22) et, d'un autre côté, avec une anode d'un thyristor de décharge (6) du dispositif de décharge et charge (5) via une résistance d'amortissement (13) et une diode (14) de telle sorte que le dispositif de décharge et charge (5) soit également utilisé pour décharger le thyristor de commutation (12) tandis que la cathode du thyristor de commutation (12) est directement relié avec une boucle de roue libre (21) ainsi qu'avec la barre omnibus (20) via une diode de désaccouplement (17).

2. Branche de commutation déchargeable selon la revendication 1, **caractérisée en ce** que des résistances de charge (18, 19) sont disposées parallèlement aux valves de charge (8, 9).

3. Branche de commutation déchargeable selon la revendication 1, **caractérisée en ce** qu'un varistor (15) est disposé parallèlement la résistance d'amortissement (13), varistor qui limite la chute de tension via la résistance d'amortissement (13) afin d'assurer, tout moment, le déchargement du thyristor de commutation (12).

4. Branche de commutation déchargeable selon la revendication 1, **caractérisée en ce** qu'une réactance saturable (23) est disposée en série avec la diode de désaccouplement (17).
